(19) Europäisches Patentamt
European Patent Office
Office européen des brevets

(11) **EP 4 539 143 A1**

(12) **EUROPEAN PATENT APPLICATION**
published in accordance with Art. 153(4) EPC

(43) Date of publication:
**16.04.2025 Bulletin 2025/16**

(21) Application number: **23904022.3**

(22) Date of filing: **14.12.2023**

(51) International Patent Classification (IPC):
$H01M\ 4/134^{(2010.01)}$    $H01M\ 4/38^{(2006.01)}$
$H01M\ 4/48^{(2010.01)}$    $H01M\ 4/62^{(2006.01)}$
$H01M\ 4/1395^{(2010.01)}$    $H01M\ 10/052^{(2010.01)}$
$H01M\ 4/02^{(2006.01)}$

(52) Cooperative Patent Classification (CPC):
H01M 4/02; H01M 4/134; H01M 4/1395;
H01M 4/38; H01M 4/48; H01M 4/62; H01M 10/052;
Y02E 60/10

(86) International application number:
**PCT/KR2023/020620**

(87) International publication number:
**WO 2024/128823 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.12.2022 KR 20220175723**

(71) Applicant: **LG Energy Solution, Ltd.
Seoul 07335 (KR)**

(72) Inventors:
• **PARK, Su Jin**
**Daejeon 34122 (KR)**
• **KWON, Yohan**
**Daejeon 34122 (KR)**
• **LEE, Sangmin**
**Daejeon 34122 (KR)**
• **LEE, Jaewook**
**Daejeon 34122 (KR)**

(74) Representative: **Hoffmann Eitle
Patent- und Rechtsanwälte PartmbB
Arabellastraße 30
81925 München (DE)**

(54) **LITHIUM SECONDARY BATTERY ANODE COMPRISING PATTERN, AND LITHIUM SECONDARY BATTERY COMPRISING ANODE**

(57) The present application relates to a negative electrode for a lithium secondary battery including a pattern, and a lithium secondary battery including a negative electrode.

[Figure 1]

**Description**

[Technical Field]

This application claims priority to and the benefit of Korean Patent Application No. 10-2022-0175723 filed in the Korean Intellectual Property Office on December 15, 2022, the entire contents of which are incorporated herein by reference.

The present application relates to a negative electrode for a lithium secondary battery including a pattern, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions coming out from the positive electrode, and silicon-based particles having a high discharge capacity may be used as the negative electrode active material.

In particular, according to the demand for high density energy batteries in recent years, research is being actively conducted on a method for increasing a capacity by using together a silicon-based compound such as Si/C and SiOx having a capacity 10 times or higher than that of a graphite-based material, as a negative electrode active material. However, as compared with graphite that is typically used, a silicon-based compound that is a high-capacity material has a large capacity but undergoes rapid volume expansion during charging, thereby disconnecting a conductive path to degrade battery characteristics.

Accordingly, in order to address a problem occurring when the silicon-based compound is used as the negative electrode active material, methods of suppressing the volume expansion itself such as a method of controlling a driving potential, a method of additionally further coating a thin film on an active material layer and a method of controlling a particle diameter of a silicon-based compound, or various measures for preventing a conductive path from being disconnected have been discussed. However, the above methods may rather deteriorate the performance of a battery, and thus, the application thereof is limited, so that there is still a limitation in commercializing the manufacture of a battery including a negative electrode having a high content of a silicon-based compound.

In other words, a negative electrode using a silicon-based active material must be applied in order to maximize capacity characteristics and to satisfy rapid charging performance, but no method has been found to solve the problem caused by the volume expansion of the silicon-based active material itself as described above. In particular, research is being conducted to control the volume expansion of the negative electrode, which must include a high content of silicon-based active material, by using a conductive material and a binder together. However, since the conductive material and the binder are included in small amounts compared to the active material, control of the contents thereof is very limited. That is, there are many limitations in changing the composition and content.

Therefore, there is a need for research capable of suppressing the volume expansion of the silicon-based active material due to intercalation and deintercalation of lithium during charging and discharging even when the silicon-based active material is used as a negative electrode active material in order to improve capacity performance.

Prior Art Document

(Patent Literature 1) Japanese Patent Application Publication No. 2009-080971

[Detailed Description of the Invention]

[Technical Problem]

Research is being conducted to control the volume expansion of the negative electrode, which must include a high content of silicon-based active material, by using a conductive material and a binder together. However, since the conductive material and the binder are included in small amounts compared to the active material, control of the contents thereof is very limited. That is, there are many limitations in changing the composition and content.

In regard to this, it has been found through research that the above-described problems can be solved when a pattern is introduced into a negative electrode active material layer of a negative electrode including a silicon-based active material and the pattern satisfies a certain volume.

Accordingly, the present application relates to a negative electrode for a lithium secondary battery including a pattern capable of solving the problems described above and a lithium secondary battery including the negative electrode.

[Technical Solution]

An exemplary embodiment of the present specification provides a negative electrode for a lithium secondary battery including: a negative electrode current collector layer; and a negative electrode active material layer formed on one surface or both surfaces of the negative electrode current collector layer, in which the negative electrode active material layer includes a pattern portion and satisfies Formula 1 below:

$$[\text{Formula 1}]$$

$$5 \leq [B/(A+B)] \times 100(\%) \leq 30$$

in Formula 1 above,

    A refers to a volume of the negative electrode active material layer, and
    B refers to a volume of the pattern portion of the negative electrode active material layer.

An exemplary embodiment of the present application provides a lithium secondary battery including: a positive electrode; the negative electrode for a lithium secondary battery according to the present application; a separator provided between the positive electrode and the negative electrode; and an electrolyte.

[Advantageous Effects]

The negative electrode for a lithium secondary battery of the present invention includes a silicon-based active material and targets high capacity and high energy density. In this case, the silicon-based active material is included in a high content in the negative electrode active material layer, and accordingly, volume expansion during charging and discharging may be problematic. In the case of the negative electrode for a lithium secondary battery according to the present application, the negative electrode active material layer includes a pattern portion, and in particular, the volumes of the pattern portion and the negative electrode active material layer satisfy the relationship of Formula 1 above.

That is, the volume expansion is solved by adjusting the physical volume relationship while maintaining the composition, rather than adjusting the composition of the negative electrode active material layer. When using a silicon-based negative electrode in the end, in order to satisfy a range (less than 5 to 10%) within which the volume expansion rate of the negative electrode active material layer is not a problem for use, the volume of the pattern portion is set as much as that, and the ratio of the volumes is adjusted to the range of Formula 1 above.

Accordingly, the negative electrode including a negative electrode active material layer that satisfies Formula 1 above can maximize the life characteristics of a lithium secondary battery by reducing the volume expansion during charging and discharging, and can provide a lithium secondary battery with excellent rapid charging performance while having the characteristics of high density and high capacity, which are the advantages of a silicon-based negative electrode.

The above-described configuration has an advantageous effect not only for stack-type pouch batteries, but also for cylindrical and prismatic batteries wound into a roll shape, and in the above configuration, there is no difference in volume expansion even when the formation charging speed is increased compared to the existing condition. In addition, features of reducing not only expansions in the x and y directions but also thickness change in the z direction.

[Brief Description of Drawings]

FIG. 1 is a view showing a stack structure of a negative electrode for a lithium secondary battery according to an exemplary embodiment of the present application.

FIG. 2 is a view showing a stack structure of a lithium secondary battery according to an exemplary embodiment of the present application.

FIG. 3 is a view showing a structure in which an active material layer of a negative electrode for a lithium secondary battery according to an exemplary embodiment of the present application is patterned.

<Explanation of Reference Numerals and Symbols>

10: negative electrode current collector layer
20: negative electrode active material layer
30: separator
40: positive electrode active material layer
50: positive electrode current collector layer
60: pattern portion
100: negative electrode for lithium secondary battery
200: positive electrode for lithium secondary battery

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mini II available from BEL Japan, Inc. That is, in the present application, the BET specific surface area may refer to the specific surface area measured by the above measurement method.

In the present specification, "Dn" refers to a particle size distribution, and refers to a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the average particle diameter may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In an exemplary embodiment of the present application, the particle size or particle diameter may mean an average diameter or representative diameter of each crystal grain constituting the metal powder.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a negative electrode for a lithium secondary battery including: a negative electrode current collector layer; and a negative electrode active material layer formed on one surface or both surfaces of the negative electrode current collector layer, in which the negative electrode active material layer includes a pattern portion and satisfies Formula 1 below:

$$[\text{Formula 1}]$$

$$5 \leq [B/(A+B)] \times 100(\%) \leq 30$$

in Formula 1 above,

A refers to a volume of the negative electrode active material layer, and
B refers to a volume of the pattern portion of the negative electrode active material layer.

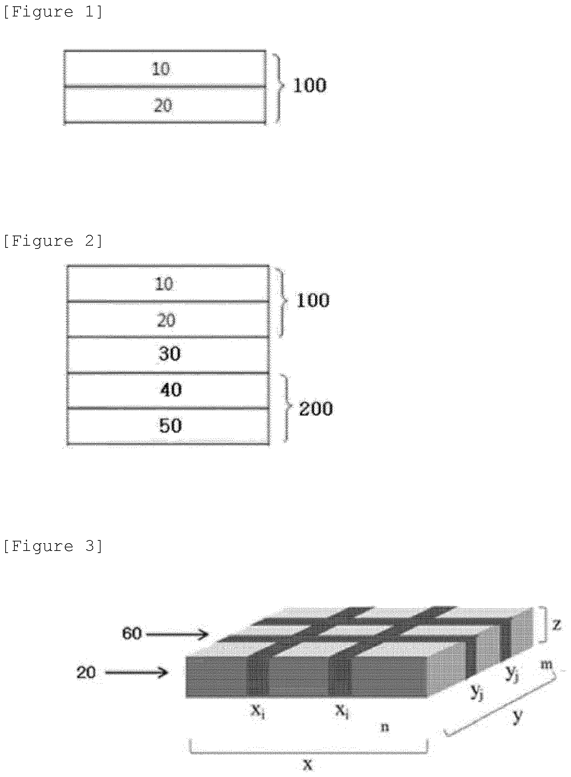

FIG. 3 is a view showing a structure in which an active material of a negative electrode for a lithium secondary battery according to an exemplary embodiment of the present application is patterned. Specifically, A refers to a volume of the entire negative electrode active material layer including the pattern portion, and B refers to a volume of the pattern portion in the negative electrode active material layer.

In the present application, the pattern portion may be defined as an uncoated portion region of the negative electrode active material layer, in which a negative electrode active material layer is not provided. That is, the pattern portion is a portion on top of the negative electrode current collector layer, in which a negative electrode active material layer is not provided, and is different from a structure in which the negative electrode active material layer has a pattern shape by being separated by a partition wall or other materials.

According to the present invention, the negative electrode including a negative electrode active material layer that satisfies Formula 1 above can maximize the life characteristics of a lithium secondary battery by reducing the volume expansion during charging and discharging, and can provide a lithium secondary battery with excellent rapid charging performance while having the characteristics of high density and high capacity, which are the advantages of a silicon-based negative electrode. The pattern portion of the present invention can play the above role only when the negative electrode active material layer is not formed. If a partition wall is formed for demarcation, a portion blocked by the partition wall cannot accommodate the volume expansion, unlike the pattern portion of the present invention, so the effect of reducing the volume expansion is not obtained.

In an exemplary embodiment of the present application, Formula 1 above may satisfy a range of $5 \leq [B/(A+B)] \times 100(\%) \leq 30$, specifically $6 \leq [B/(A+B)] \times 100(\%) \leq 25$, and more specifically $10 \leq [B/(A+B)] \times 100(\%) \leq 25$.

The present application solves the problem of the volume expansion by adjusting the physical volume relationship while maintaining the composition, rather than adjusting the composition of the negative electrode active material layer. When using a silicon-based negative electrode in the end, in order to satisfy a range (less than 5 to 10%) within which the volume expansion rate of the negative electrode active material layer is not a problem for use, the volume of the pattern portion is set as much as that, and the ratio of the volumes is adjusted to the range of Formula 1 above.

When the range of Formula 1 above is satisfied, the volume expansion can be controlled not only in stack-type pouch batteries but also in cylindrical and prismatic batteries wound into a roll shape, resulting in an advantageous effect. In addition, there is no difference in volume expansion even when the formation charging speed is increased compared to the existing condition, and not only expansions in the x and y directions but also thickness change in the z direction can be reduced.

In an exemplary embodiment of the present application, Formula 1 above means a ratio of a volume of the pattern portion to a total volume of the negative electrode active material layer, and the unit of Formula 1 may be expressed as %.

In an exemplary embodiment of the present application, there is provided the negative electrode for a lithium secondary battery in which the negative electrode active material layer satisfies Formula 2 below:

$$[\text{Formula 2}]$$

$$[\{(x+x1)(y+y1)(z+z1)-xyz\} / xyz] \times 100(\%) < 50\%$$

in Formula 2 above,

x, y, and z are a total width, a total length, and a total thickness of the negative electrode active material layer including the pattern, respectively, after manufacturing the negative electrode for a lithium secondary battery, and

x1, y1, and z1 are changes in length in the x, y, and z directions, respectively, after manufacturing the negative electrode for a lithium secondary battery, and immediately after 1/3C CC-CV charge to 4.2V (0.05C cut-off) followed by 1/3C CC discharge to 2.5V.

Formula 2 above may satisfy [Formula 2] < 50%, and specifically [Formula 2] < 48%, or [Formula 2] < 45%, and 5% < [Formula 2], 10% < [Formula 2], 15% < [Formula 2], 20%< [Formula 2], or 25% < [Formula 2].

That is, Formula 2 above may mean a volume expansion rate of an entire volume of the negative electrode active material layer for a lithium secondary battery in a fresh state after undergoing an activation process (i.e., 1/3C CC-CV single charge to 4.2V (0.05C cut-off) followed by 1/3C CC discharge to 2.5V). As the negative electrode active material layer includes a pattern portion that satisfies the range of Formula 1 above, the range of Formula 2 above can be satisfied.

Specifically, Formula 2 above can be confirmed in FIG. 3. x is a length in a TD direction, meaning a total width of the negative electrode active material layer, y is a length in an MD direction, meaning a total length of the negative electrode active material layer, and z refers to a thickness of the negative electrode active material layer. In this case, x1, y1, and z1 refer to changes in length in the x, y, and z directions, respectively, after manufacturing the negative electrode for a lithium secondary battery followed by the activation process described above.

In an exemplary embodiment of the present application, there is provided the negative electrode for a lithium secondary battery in which the negative electrode active material layer satisfies Formula 3 below:

[Formula 3]

$$[\{(x+x2)(y+y2)(z+z2)-xyz\} \; / \; xyz] \; x \; 100(\%) \; < \; 100\%$$

in Formula 3 above,

x, y, and z are a total width, a total length, and a total thickness of the negative electrode active material layer including the pattern, respectively, after manufacturing the negative electrode for a lithium secondary battery, and

x2, y2, and z2 refer to changes in length in the x, y, and z directions, respectively, after manufacturing the negative electrode for a lithium secondary battery followed by 300 cycles of 1C CC-CV charge to 4.2V (0.05C cut-off) and 0.5C CC discharge to 3.0V.

Formula 3 above may satisfy [Formula 3] < 100%, and specifically [Formula 3] < 97%, or [Formula 3] < 95%, and 50% < [Formula 3], 55% < [Formula 3], or 60 %< [Formula 3].

That is, Formula 3 above may mean a volume expansion rate of an entire volume of the negative electrode active material layer for a lithium secondary battery in a fresh state after undergoing 300 cycles (i.e., 300 cycles of 1C CC-CV charge to 4.2V (0.05C cut-off) followed by 0.5C CC discharge to 3.0V). As the negative electrode active material layer includes a pattern portion that satisfies the range of Formula 1 above, the range of Formula 3 above can be satisfied.

Specifically, Formula 3 above can be confirmed in FIG. 3. x is a length in a TD direction, meaning a total width of the negative electrode active material layer, y is a length in an MD direction, meaning a total length of the negative electrode active material layer, and z refers to a thickness of the negative electrode active material layer. In this case, x2, y2, and z2 refer to changes in length in the x, y, and z directions, respectively, after manufacturing the negative electrode for a lithium secondary battery followed by the 300 cycles described above.

In an exemplary embodiment of the present application, there is provided the negative electrode for a lithium secondary battery in which the negative electrode active material layer satisfies Formula 4 below:

[Formula 4]

$$5 \; \leq \; xyz \; - \; \{(xi \; x \; n)yz \; + \; x(yj \; x \; m)z \; - \; nmxiyj\} \; \leq \; 30$$

in Formula 4 above,

x, y, and z are a total width, a total length, and a total thickness of the negative electrode active material layer including the pattern, respectively, after manufacturing the negative electrode for a lithium secondary battery, and

n is the number of patterns in the x direction,

m is the number of patterns in the y direction,

xi refers to a width of the pattern,

yj refers to a length of the pattern,

i is an integer ranging from 1 to n, and

j is an integer ranging from 1 to m.

FIG. 3 corresponds to a case where the pattern portion is formed as a 2D pattern. In this case, n is the number of patterns in the x-direction. When n is 3, i can be expressed as an integer ranging from 1 to 3, and x1, x2, and x3 may refer to a width of each pattern. Similarly, m is the number of patterns in the y direction. When m is 3, j is an integer ranging from 1 to 3, and y1, y2, and y3 may refer to a length of each pattern.

Formula 4 above may mean a volume excluding a volume of the pattern portion included in the negative electrode active material layer based on the total volume of the negative electrode active material layer, and may mean an actual volume included by the negative electrode active material layer. That is, if Formula 4 above is less than the above-described range, the capacity characteristics may not be ensured, and if Formula 4 exceeds the above-described range, the volume expansion is not controlled, and the life characteristics are rather lowered.

In an exemplary embodiment of the present application, there is provided the negative electrode for a lithium secondary battery in which the pattern portion includes one or more selected from the group consisting of a 1D pattern, a 2D pattern, a V pattern, and a U pattern.

In this case, the 1D pattern may mean a pattern that is formed only in the length direction or the width direction in the negative electrode active material layer, and the 2D pattern may mean a pattern that is formed in both the length direction and the width direction in the negative electrode active material layer. In addition, the V or U pattern may mean that a shape of a formed pattern is a V shape or a U shape.

In the present application, there is provided the negative electrode for a lithium secondary battery in which the negative electrode active material layer includes a negative electrode active material layer composition, and the negative electrode active material layer composition includes a silicon-based active material, a negative electrode conductive material, and a negative electrode binder.

In this case, the silicon-based active material can be used as a negative electrode active material.

The negative electrode active material layer composition according to an exemplary embodiment of the present invention solves the problems in the related art by using the negative electrode active material layer having the above-described pattern portion even when a silicon-based active material is used.

In an exemplary embodiment of the present application, the silicon-based active material may include one or more selected from the group consisting of SiOx (x=0), SiOx (0<x<2), SiC, and a Si alloy.

The active material of the present invention includes a silicon-based active material. The silicon-based active material may be SiOx, Si/C, or Si. SiOx may include a compound represented by SiOx ($0 \leq x < 2$). Since $SiO_2$ does not react with lithium ions and cannot store lithium, x is preferably within the above range. The silicon-based active material may be Si/C composed of a composite of Si and C, or Si. In addition, two or more of the above silicon-based active materials may be mixed and used. The negative electrode active material may further include a carbon-based active material together with the silicon-based active material described above. The carbon-based active material can contribute to improving cycle characteristics or battery lifespan performance of the negative electrode or secondary battery of the present invention.

In general, a silicon-based active material is known to have a capacity that is 10 times higher than that of a carbon-based active material, and accordingly, when the silicon-based active material is applied to a negative electrode, it is expected that an electrode having a high level of energy density can be implemented even with a thin thickness.

In an exemplary embodiment of the present application, the silicon-based active material may include one or more selected from the group consisting of SiOx (x=0) and SiOx (0<x<2), and may include the SiOx (x=0) in an amount of 70 parts by weight or more on the basis of 100 parts by weight of the silicon-based active material.

In another exemplary embodiment, the silicon-based active material may include SiOx (x=0) in an amount of 70 parts by weight or more, preferably 80 parts by weight or more, and more preferably 90 parts by weight or more, and 100 parts by weight or less, preferably 99 parts by weight or less, and more preferably 95 parts by weight or less on the basis of 100 parts by weight of the silicon-based active material.

The silicon-based active material according to the present application may include 70 parts by weight or more of SiOx (x=0) on the basis of 100 parts by weight of the silicon-based active material. When compared with a silicon-based active material in which a SiOx (0<x<2)-based active material is used as a main material, the theoretical capacity thereof is much lower than that of the silicon-based active material of the present application. That is, if a SiOx (0<x<2)-based active material is used, even when the active material itself is treated in any way, it is not possible to implement conditions equivalent to the charging and discharging capacities of the silicon-based active material of the present invention.

In an exemplary embodiment of the present application, pure silicon (Si) may be used as the silicon-based active material. The use of pure silicon (Si) as the silicon-based active material may mean that, on the basis of 100 parts by weight of the total silicon-based active material as described above, pure Si particles (SiOx (x=0)) not bonded to other particles or elements are included within the above range.

The capacity of the silicon-based active material is significantly higher than that of a graphite-based active material that is typically used, so that there have been more attempts to apply the same. However, the volume expansion rate of the silicon-based active material during charging/discharging is high, so that only a small amount thereof is mixed and used with a graphite-based active material.

Therefore, in the present invention, a negative electrode including a pattern portion satisfying Formula 1 above is manufactured in order to solve the problems of maintaining the conductive path and the combination of the conductive material, the binder, and the active material with respect to the volume expansion described above while using the silicon-based active material as the negative electrode active material for improving the capacity performance.

Note that an average particle diameter (D50) of the silicon-based active material of the present invention may be 5 μm to 10 μm, specifically 5.5 μm to 8 μm, and more specifically 6 μm to 7 μm. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value of the range, a contact area between the silicon particles and the conductive material is excellent due to the composite made of the conductive material and the binder in the negative electrode slurry, so that a sustaining possibility of the conductive network increases, resulting in an increase in the capacity retention rate. Note that, when the average particle diameter satisfies the above range, excessively large silicon particles are excluded, so that a surface of the negative electrode is formed smooth. Accordingly, a current density nonuniformity phenomenon during charging and discharging can be prevented.

In an exemplary embodiment of the present application, the silicon-based active material generally has a characteristic BET specific surface area. The BET specific surface area of the silicon-based active material is preferably 0.1 m$^2$/g to 150.0 m$^2$/g, more preferably 0.1 m$^2$/g to 100.0 m$^2$/g, particularly preferably 0.2 m$^2$/g to 80.0 m$^2$/g, and most preferably 0.2 m$^2$/g to 18.0 m$^2$/g. The BET specific surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or fragment-shaped particles. Alternatively, but less preferably, the silicon particles may also have a fiber structure or be present in the form of a silicon-containing film or coating.

In an exemplary embodiment of the present application, the silicon-based active material may be included in an amount of 60 parts by weight or more on the basis of 100 parts by weight of the negative electrode active material layer composition.

In another exemplary embodiment, on the basis of 100 parts by weight of the negative electrode active material layer composition, 60 parts by weight or more, preferably 65 parts by weight or more, and more preferably 70 parts by weight or more, and 95 parts by weight or less, preferably 90 parts by weight or less, and more preferably 85 parts by weight or less of the silicon-based active material may be included.

The negative electrode active material layer composition according to the present application uses the specific conductive material and binder capable of controlling the volume expansion rate during charging and discharging even when the silicon-based active material having a significantly high capacity is used within the above range, and the pattern portion satisfying the range of Formula 1 above is provided, so that output characteristics in charging and discharging are excellent while the performance of the negative electrode is not degraded.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the circularity is determined by Formula 1-1 below, in which A is an area and P is a boundary line.

[Formula 1-1]

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, in the case of a silicon-based compound, even when the characteristics of the silicon-based active material itself are adjusted as described above according to the present application, the volume may rapidly expand during the charging/discharging, thereby causing some problems of damaging the conductive path formed in the negative electrode active material layer.

Therefore, in an exemplary embodiment of the present application, the negative electrode conductive material may include one or more selected from the group consisting of a point-like conductive material, a planar conductive material and a linear conductive material.

In an exemplary embodiment of the present application, the point-like conductive material refers to a point-like or spherical conductive material that may be used for improving conductivity of the negative electrode, and has conductivity without causing a chemical change. Specifically, the point-like conductive material may be one or more species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 m$^2$/g or greater and 70 m$^2$/g or less, preferably 45 m$^2$/g or greater and 65 m$^2$/g or less, and more preferably 50 m$^2$/g or greater and 60 m$^2$/g or less.

In an exemplary embodiment of the present application, a content of the functional group (volatile matter) of the point-like conductive material may satisfy a range of 0.01% or more and 1% or less, preferably 0.01% or more and 0.3% or less, and more preferably 0.01% or more and 0.1% or less.

In particular, when the content of the functional group of the point-like conductive material satisfies the above range, a functional group is present on a surface of the point-like conductive material, so that the point-like conductive material can be smoothly dispersed in a solvent when water is used as the solvent. In particular, in the present invention, as the silicon particle and the specific binder are used, the content of the functional group of the point-like conductive material can be lowered, which exhibits an excellent effect on improving dispersibility.

In an exemplary embodiment of the present application, the point-like conductive material having the content of the functional group within the range described above is included together with the silicon-based active material, and the content of the functional group can be adjusted according to a degree of heat treatment of the point-like conductive material.

In an exemplary embodiment of the present application, the particle diameter of the point-like conductive material may be 10 nm to 100 nm, preferably 20 nm to 90 nm, and more preferably 20 nm to 60 nm.

In an exemplary embodiment of the present application, the negative electrode conductive material may include a planar conductive material.

The planar conductive material improves conductivity by increasing surface contact between silicon particles in the negative electrode, and at the same time, can serve to suppress disconnection of the conductive path due to the volume expansion. The planar conductive material may be expressed as a plate-like conductive material or a bulk-type conductive material.

In an exemplary embodiment of the present application, the planar conductive material may be provided in the form of binding to the surfaces of the silicon-based particles. Specifically, the planar conductive material may be provided in such a form that an -OH group or -O on the surface of the silicon-based particle binds to a hydrophilic group of the planar conductive material.

In an exemplary embodiment of the present application, the planar conductive material may include one or more selected from the group consisting of plate-like graphite, graphene, graphene oxide, and graphite flake, and preferably may be plate-like graphite.

In an exemplary embodiment of the present application, an average particle diameter (D50) of the planar conductive material may be 2 μm to 7 μm, specifically 3 μm to 6 μm, and more specifically 3.5 μm to 5 μm. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, the planar conductive material may have D10 of 0.5 μm or greater and 2.0 μm or less, D50 of 2.5 μm or greater and 3.5 μm or less, and D90 of 6.5 μm or greater and 15.0 μm or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 1 m$^2$/g or greater.

In another exemplary embodiment, the planar conductive material may have a BET specific surface area of 1 m$^2$/g or greater and 500 m$^2$/g or less, preferably 5 m$^2$/g or greater and 300 m$^2$/g or less, and more preferably 5 m$^2$/g or greater and 250 m$^2$/g or less.

For the planar conductive material of the present application, a planar conductive material with a high specific surface area or a planar conductive material with a low specific surface area may be used.

In another exemplary embodiment, the planar conductive material is a planar conductive material with a high specific surface area, and the BET specific surface area may satisfy a range of 50 $m^2$/g or greater and 500 $m^2$/g or less, preferably 80 $m^2$/g or greater and 300 $m^2$/g or less, and more preferably 100 $m^2$/g or greater and 300 $m^2$/g or less.

In another exemplary embodiment, the planar conductive material is a planar conductive material with a low specific surface area, and the BET specific surface area may satisfy a range of 1 $m^2$/g or greater and 40 $m^2$/g or less, preferably 5 $m^2$/g or greater and 30 $m^2$/g or less, and more preferably 5 $m^2$/g or greater and 25 $m^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

Illustratively, the linear conductive material may be a single-walled carbon nanotube (SWCNT) with a large BET specific surface area, a linear form, a very small diameter, and a very long length. The linear conductive material such as SWCNT cannot be stretched through dispersion and has a strong ability to return to its original form when dried. As a result, the linear conductive material such as SWCNT has a strong ability to return to its original form when dried, so it generally is present in a form of wrapping or connecting a negative electrode active material or secondary agglomerate. The bonding method can be adsorption by van der Waals force.

In an exemplary embodiment of the present application, the negative electrode conductive material may be included in an amount of 10 parts by weight or more and 40 parts by weight or less, on the basis of 100 parts by weight of the negative electrode active material layer composition.

In another exemplary embodiment, the negative electrode conductive material may be included in an amount of 10 parts by weight or more and 40 parts by weight or less, preferably 10 parts by weight or more and 30 parts by weight or less, and more preferably 10 parts by weight or more and 25 parts by weight or less, on the basis of 100 parts by weight of the negative electrode active material layer composition.

In an exemplary embodiment of the present application, the negative electrode conductive material may include a planar conductive material and a linear conductive material.

In the exemplary embodiment of the present application, the negative electrode conductive material may include 80 parts by weight or more and 99.9 parts by weight or less of the planar conductive material, and 0.1 part by weight or more and 20 parts by weight or less of the linear conductive material on the basis of 100 parts by weight of the negative electrode conductive material.

In another exemplary embodiment, the negative electrode conductive material may include 80 parts by weight or more and 99.9 parts by weight or less, preferably 85 parts by weight or more and 99.9 parts by weight or less, and more preferably 95 parts by weight or more and 98 parts by weight or less of the planar conductive material on the basis of 100 parts by weight of the negative electrode conductive material.

In another exemplary embodiment, the negative electrode conductive material may include 0.1 part by weight or more and 20 parts by weight or less, preferably 0.1 part by weight or more and 15 parts by weight or less, and more preferably 2 parts by weight or more and 5 parts by weight or less of the linear conductive material on the basis of 100 parts by weight of the negative electrode conductive material.

In an exemplary embodiment of the present application, the negative electrode conductive material includes the planar conductive material and the linear conductive material and satisfies the composition and ratio described above, respectively, so the life characteristics of an existing lithium secondary battery are not significantly affected, and particularly, the number of points where charging and discharging are possible increases when the planar conductive material and the linear conductive material are included, so that output characteristics are excellent at a high C-rate and an amount of gas generation at high temperatures is reduced.

The negative electrode conductive material according to the present application has a completely different configuration from that of a positive electrode conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the planar conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a plane or plate-like shape, and may be expressed as plate-like graphite. That is, the planar conductive material is a material that is included so as to maintain a conductive path in the negative electrode active material layer, and means a material for securing a conductive path in a plane shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The negative electrode binder according to an exemplary embodiment of the present application serves to hold the silicon-based active material and the negative electrode conductive material in order to prevent distortion and structural deformation of the negative electrode structure when the volume of the silicon-based active material expands and relaxes. When such roles are satisfied, all of the general negative electrode binders can be applied. Specifically, an aqueous binder may be used, and more specifically, a PAM-based binder may be used.

In an exemplary embodiment of the present application, the negative electrode binder may be included in an amount of 30 parts by weight or less, preferably 25 parts by weight or less, more preferably 20 parts by weight or less, and 5 parts by weight or more, and 10 parts by weight or more, on the basis of 100 parts by weight of the negative electrode active material layer composition.

Compared to existing carbon-based negative electrodes, when a Si-based negative electrode is used, an aqueous binder is applied in parts by weight described above, allowing the use of a point-like conductive material with a low functional group content. In addition, the above characteristics allows the point-like conductive material to have hydrophobicity and the excellent bond strength between the conductive material/binder.

In an exemplary embodiment of the present application, the negative electrode slurry including the negative electrode active material layer composition may be coated on one surface or both surfaces of the negative electrode current collector to form a negative electrode for a lithium secondary battery.

In an exemplary embodiment of the present application, the negative electrode for a lithium secondary battery may be formed by applying and drying a negative electrode slurry including the negative electrode composition to one surface or both surfaces of the negative electrode current collector layer.

In an exemplary embodiment of the present application, the negative electrode slurry may include a negative electrode active material layer composition and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode active material layer composition included in the negative electrode slurry, and may mean a content of the negative electrode active material layer composition on the basis of 100 parts by weight of the negative electrode slurry.

When the solid content of the negative electrode slurry satisfies the above range, the viscosity is appropriate during formation of the negative electrode active material layer, so that particle agglomeration of the negative electrode composition is minimized to efficiently form the negative electrode active material layer.

In an exemplary embodiment of the present application, the slurry solvent may be used without limitation as long as it can disperse the negative electrode composition described above, and specifically, water or NMP may be used.

FIG. 1 is a view showing a stack structure of a negative electrode for a lithium secondary battery according to an exemplary embodiment of the present application. Specifically, a negative electrode 100 for a lithium secondary battery can be seen which includes a negative electrode active material layer 20 on one surface of a negative electrode current collector layer 10. FIG. 1 shows that the negative electrode active material layer is formed on one surface of the negative electrode current collector layer, but the negative electrode active material layer may be formed on both surfaces of the negative electrode current collector layer.

In an exemplary embodiment of the present application, the negative electrode current collector layer generally has a thickness of 1 μm to 100 μm. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present application, there is provided the negative electrode for a lithium secondary battery in which a thickness of the negative electrode current collector layer is 1 μm or greater and 100 μm or less and a thickness of the negative electrode active material layer is 20 μm or greater and 500 μm or less.

However, the thickness may be variously modified depending on a type and a use of negative electrode used, and is not limited thereto.

In an exemplary embodiment of the present application, a porosity of the negative electrode active material layer may satisfy a range of 10% or greater and 60% or less.

In another exemplary embodiment, the porosity of the negative electrode active material layer may satisfy a range of 10% or greater and 60% or less, preferably 20% or greater and 50% or less, and more preferably 30% or greater and 45% or less.

The porosity varies depending on compositions and contents of the silicon-based active material, conductive material and binder included in the negative electrode active material layer, and in particular, satisfies the range described above when the silicon-based active material according to the present application and the conductive material are included in the specific compositions and contents, so that the electrode has electrical conductivity and resistance within appropriate ranges.

An exemplary embodiment of the present application provides a lithium secondary battery including a positive electrode; the negative electrode for a lithium secondary battery according to the present application; a separator provided between the positive electrode and the negative electrode; and an electrolyte.

FIG. 2 is a view showing a stack structure of a lithium secondary battery according to an exemplary embodiment of the present application. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a stack structure with a separator 30 interposed therebetween.

The secondary battery according to an exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 μm, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.6$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.6$) or $Li_2Mn_3MO_8$ (where M is at least one selected from the group consisting of Fe, Co, Ni, Cu and Zn.); $LiMn_2O_4$ in which a part of Li of the chemical formula is substituted with an alkaline earth metal ion, or the like, but is not limited thereto. The positive electrode may be Li metal.

In the exemplary embodiment of the present application, the positive electrode active material includes a lithium composite transition metal compound including nickel (Ni), cobalt (Co), and manganese (Mn), the lithium composite transition metal compound includes single particles or secondary particles, and an average particle diameter (D50) of the single particles may be 1 μm or greater.

For example, the average particle diameter (D50) of the single particles may be 1 μm or greater and 12 μm or less, 1 μm or greater and 8 μm or less, 1 μm or greater and 6 μm or less, greater than 1 μm and 12 μm or less, greater than 1 μm and 8 μm or less, or greater than 1 μm and 6 μm or less.

Even when the single particles are formed with a small average particle diameter (D50) of 1 μm or greater and 12 μm or less, the particle strength may be excellent. For example, the single particle may have a particle strength of 100 to 300 MPa when roll-pressing with a force of 650 kgf/cm². Accordingly, even when the single particles are roll-pressed with a strong force of 650 kgf/cm², a phenomenon of increased micro-particles in an electrode due to particle breakage is alleviated, thereby improving the lifetime characteristic of the battery.

The single particles may be manufactured by mixing and firing a transition metal precursor and a lithium source material. The secondary particles may be manufactured by a method different from that of the single particles, and the composition thereof may be the same as or different from that of the single particles.

The method of forming the single particles is not particularly limited, but generally can be formed by over-firing with raised firing temperature, or may be manufactured by using additives such as grain growth promoters that help over-firing, or by changing a starting material.

For example, the firing is performed at a temperature at which single particles can be formed. To this end, the firing should be performed at a temperature higher than a temperature during manufacture of the secondary particles. For example, when the composition of the precursor is the same, the firing should be performed at a temperature about 30°C to 100°C higher than a temperature during manufacture of the secondary particles. The firing temperature for forming the single particles may vary depending on the metal composition in the precursor. For example, when forming single particles with a high-Ni NCM-based lithium composite transition metal oxide having a nickel (Ni) content of 80 mol% or more, the firing temperature may be about 700°C to 1000°C, and preferably about 800°C to 950°C. When the firing temperature satisfies the above range, a positive electrode active material including single particles having excellent electrochemical properties can be manufactured. If the firing temperature is below 790°C, a positive electrode active material including a lithium composite transition metal compound in the form of secondary particles may be manufactured, and if the firing temperature exceeds 950°C, excessive firing occurs and a layered crystal structure is not properly formed, so that the electrochemical properties may be deteriorated.

In the present specification, the single particle is a term used to distinguish the same from typical secondary particles resulting from agglomeration of tens to hundreds of primary particles, and is a concept including a single particle consisting of one primary particle and a quasi-single particle form that is an agglomerate of 30 or less primary particles.

Specifically, in the present invention, the single particle may be a single particle consisting of one primary particle or a quasi-single particle form that is an agglomerate of 30 or less primary particles, and the secondary particle may be an agglomerate form of hundreds of primary particles.

In the exemplary embodiment of the present application, the lithium composite transition metal compound, which is the positive electrode active material, further includes secondary particles, and the average particle diameter (D50) of the single particles is smaller than the average particle diameter (D50) of the secondary particles.

In the present invention, the single particle may be a single particle consisting of one primary particle or a quasi-single particle form that is an agglomerate of 30 or less primary particles, and the secondary particle may be an agglomerate form of hundreds of primary particles.

The above-described lithium composite transition metal compound may further include secondary particles. The secondary particle means a form formed by agglomeration of primary particles, and can be distinguished from the concept of a single particle including one primary particle, one single particle and a quasi-single particle form, which is an agglomerate of 30 or less primary particles.

The secondary particle may have a particle diameter (D50) of 1 $\mu$m to 20 $\mu$m, 2 $\mu$m to 17 $\mu$m, and preferably 3 $\mu$m to 15 $\mu$m. The specific surface area (BET) of the secondary particles may be 0.05 m$^2$/g to 10 m$^2$/g, preferably 0.1 m$^2$/g to 1 m$^2$/ g, and more preferably 0.3 m$^2$/g to 0.8 m$^2$/g.

In a further exemplary embodiment of the present application, the secondary particle is an agglomerate of primary particles, and the average particle diameter (D50) of the primary particles is 0.5 $\mu$m to 3 $\mu$m. Specifically, the secondary particle may be an agglomerate form of hundreds of primary particles, and the average particle diameter (D50) of the primary particles may be 0.6 $\mu$m to 2.8 $\mu$m, 0.8 $\mu$m to 2.5 $\mu$m, or 0.8 $\mu$m to 1.5 $\mu$m.

When the average particle diameter (D50) of the primary particles satisfies the above range, a single-particle positive electrode active material having excellent electrochemical properties can be formed. If the average particle diameter (D50) of the primary particles is too small, the number of agglomerates of primary particles forming lithium nickel-based oxide particles increases, reducing the effect of suppressing particle breakage during roll-pressing, and if the average particle diameter (D50) of the primary particles is too large, a lithium diffusion path inside the primary particles may be lengthened, increasing a resistance and degrading an output characteristic.

According to a further exemplary embodiment of the present application, the average particle diameter (D50) of the single particles is smaller than the average particle diameter (D50) of the secondary particles. As a result, the single particles may have excellent particle strength even if they are formed with a small particle diameter, and accordingly, a phenomenon of increased micro-particles in an electrode due to particle breakage is alleviated, thereby improving the lifetime characteristic of the battery.

In an exemplary embodiment of the present application, the average particle diameter (D50) of the single particles is smaller than the average particle diameter (D50) of the secondary particles.

For example, the average particle diameter (D50) of the single particles may be 1 $\mu$m to 16 $\mu$m smaller, 1.5 $\mu$m to 15 $\mu$m smaller, or 2 $\mu$m to 14 $\mu$m smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even if they are formed with a small particle diameter, and as a result, a phenomenon of increased micro-particles in an electrode due to particle breakage is alleviated, thereby improving the lifetime characteristic and the energy density of the battery.

According to a further exemplary embodiment of the present application, the single particles are included in an amount of 15 parts by weight to 100 parts by weight on the basis of 100 parts by weight of the positive electrode active material. The single particles may be included in an amount of 20 parts by weight to 100 parts by weight, or 30 parts by weight to 100 parts by weight on the basis of 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more on the basis of 100 parts by weight of the positive electrode active material. The single particles may be included in an amount of 100 parts by weight or less on the basis of 100 parts by weight of the positive electrode active material.

When the single particles are included within the above range, excellent battery characteristics may be exhibited in combination with the negative electrode material described above. In particular, when the single particles are included in an amount of 15 parts by weight or more, a phenomenon of increased micro-particles in an electrode due to particle breakage in a roll-pressing process after fabrication of an electrode can be alleviated, thereby improving the lifetime characteristics of the battery.

In the exemplary embodiment of the present application, the lithium composite transition metal compound may further include secondary particles, and the secondary particles may be included in an amount of 85 parts by weight or less on the basis of 100 parts by weight of the positive electrode active material. The secondary particles may be included in an amount of 80 parts by weight or less, 75 parts by weight or less, or 70 parts by weight or less on the basis of 100 parts by weight of the positive electrode active material. The secondary particles may be included in an amount of 0 part by weight or more on the basis of 100 parts by weight of the positive electrode active material.

When the above range is satisfied, the above-described effects due to the existence of the single particles in the positive electrode active material can be maximized. In the case in which the positive electrode active material of the secondary particles is included, the components thereof may be the same as or different from those exemplified in the single-particle positive electrode active material described above, and may mean an agglomerate form of single particles.

In the exemplary embodiment of the present application, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, most preferably 98 parts by weight or more and 99.9 parts by weight or less.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte as well as a low resistance to the migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

Mode for Invention

**<Preparation Examples>**

**<Preparation of Negative Electrode>**

Si (average particle diameter (D50): 3.5 $\mu$m) serving as a silicon-based active material, a first conductive material, a second conductive material, and polyacrylamide serving as a binder were added to distilled water serving as a solvent for formation of a negative electrode slurry at a weight ratio of 80:10:0.4:9.6 to prepare a negative electrode slurry (solid concentration: 25 wt%).

The first conductive material was plate-like graphite (specific surface area: 17 m$^2$/g, average particle diameter (D50): 3.5 $\mu$m), and the second conductive material was SWCNT.

As a mixing method, after dispersing the first conductive material, the second conductive material, the binder and water at 2500 rpm for 30 minutes with a homo mixer, the active material was added to the dispersion, which was then dispersed at 2500 rpm for 30 minutes to fabricate a slurry.

The negative electrode slurry was coated on both surfaces of a copper current collector (thickness: 8 $\mu$m) serving as a negative electrode current collector with a loading amount of 85 mg/25 cm$^2$, which was then roll-pressed and dried in a vacuum oven at 130°C for 10 hours to form a negative electrode active material layer whereby a negative electrode was prepared (porosity of negative electrode: 40.0%).

Thereafter, a pattern was formed in the negative electrode active material layer using a laser, and the shape of the pattern and the information thereof were shown in Table 1 below. In this case, the total volume (A+B) of the negative electrode active material layer was formed to be the same, and the experiment was conducted by changing only the volume of the pattern portion.

[Table 1]

|  | Pattern shape | Formula 1 | Formula 2 | Formula 3 |
|---|---|---|---|---|
| Example 1 | 2D pattern | 25 | 30 | 80 |
| Example 2 | 1D pattern | 10 | 40 | 90 |
| Example 3 | 2D pattern | 10 | 35 | 83 |
| Example 4 | V pattern, 2D pattern | 13 | 43 | 92 |
| Comparative Example 1 | - | - | - | - |
| Comparative Example 2 | 2D pattern | 3 | 55 | 102 |
| Comparative Example 3 | 2D pattern | 35 | 22 | 60 |

In Table 1, Comparative Example 1 corresponds to a case where the negative electrode for a secondary battery was manufactured in the same manner as described above, except that the pattern was not formed.

**Experimental Example 1. Evaluation of Initial Discharge Capacity**

For the secondary batteries including the negative electrodes prepared in the Examples and the Comparative Examples, the first discharge capacity was measured at 4.2-3.0V 0.33C/0.33C using an electrochemical charge/-discharge device.

**Experimental Example 2. Evaluation of Life Characteristics of Monocell at Room Temperature**

For the secondary batteries including the negative electrodes prepared in the Examples and Comparative Examples, the life and the capacity retention rate were evaluated using an electrochemical charging and discharging device. The secondary batteries were subjected to a cycle test at 4.2-3.0 V 1 C/0.5 C, and the number of cycles at which the capacity retention rate reached 80% was measured.

capacity retention rate (%)={ (discharge capacity at Nth cycle)/(discharge capacity at first cycle)}×100

**Experimental Example 3. Evaluation of Resistance Increase Rate Measurement**

After the capacity retention rates were measured by charging/discharging the secondary batteries at 0.33 C/0.33 C (4.2-3.0V) every 50 cycles during the test in Experimental Example 2, the resistance increase rates were compared and analyzed by discharging the secondary batteries at 2.5C pulse in SOC50 to measure the resistance.
For the evaluation of the resistance increase rate measurement, data at 150 cycles was each calculated.

**Experimental Example 4. Evaluation of Cell Swelling**

For the cells evaluated in Experimental Example 2, the overall thickness increase rate of the cell was calculated after formation in a state of 150 cycles of discharge (3.0V).

**Experimental Example 5. Evaluation of Pore Resistance**

Coin symmetric cells were prepared using the negative electrodes prepared in the Examples and the Comparative Examples, and the pore resistance was calculated by measuring impedances from 300 kHz to 300 mHz at 25°C with EIS.
The evaluation results of Experimental Examples 1 to 5 are shown in Table 2 below.

[Table 2]

| | Example 1 | Example 2 | Example 3 | Example 4 | Comparative Example 1 | Comparative Example 2 | Comparative Example 3 |
|---|---|---|---|---|---|---|---|
| Experimental Example 1 (mAh) | 118 | 119 | 118 | 118 | 120 | 119 | 116 |
| Experimental Example 2 (number of times) | 190 | 188 | 189 | 188 | 185 | 185 | 190 |
| Experimental Example 3 (%) | 38 | 41 | 40 | 39 | 45 | 44 | 38 |
| Experimental Example 4 (%) | 6 | 8 | 7 | 8 | 10 | 9 | 6 |
| Experimental Example 5 (ohm) | 2.71 | 2.91 | – | – | 3.55 | – | – |

The negative electrode for a lithium secondary battery of the present invention includes a silicon-based active material and targets high capacity and high energy density. In this case, the silicon-based active material is included in a high content in the negative electrode active material layer, and accordingly, volume expansion during charging and discharging may be problematic. In the case of the negative electrodes of Examples 1 to 4, the negative electrode active material layer includes a pattern portion, and in particular, it can be confirmed that the volumes of the pattern portion and the negative electrode active material layer satisfy the relationship of Formula 1 above.

Accordingly, it could be confirmed that the negative electrode including a negative electrode active material layer satisfying Formula 1 above can maximize the life characteristics of a lithium secondary battery by reducing the volume expansion during charging and discharging, and can provide a lithium secondary battery with excellent rapid charging performance while having the characteristics of high density and high capacity, which are the advantages of a silicon-based negative electrode.

Comparative Example 1 is a negative electrode that does not include a pattern portion, and as can be seen in Experimental Example 2, the life characteristics deteriorated, as can be seen in Experimental Example 3, the resistance increase rate was high, and as can be seen in Experimental Example 4, cell swelling was high. This results from the fact that the pattern portion capable of preventing the volume expansion and relaxation of the silicon-based active material (especially pure Si) was not formed, and it could be confirmed that the life characteristics dramatically deteriorated.

Comparative Example 2 corresponds to a case where the negative electrode active material layer has a pattern portion as in the present invention, but the range is less than the range of Formula 1, that is, the volume of the pattern portion is less than the volume set in the present application. Also in this case, the same results as Comparative Example 1 can be exhibited. That is, it could be confirmed that when the volume of the pattern portion is less than the set volume, the life characteristics deteriorated to the same extent as when the pattern portion is not formed.

Comparative Example 3 corresponds to a case where the volume of the pattern portion is larger than the volume set in the present application (that is, when the range of Formula 1 is exceeded). In this case, it could be confirmed that the life characteristics were similar to the Examples of the present application. However, it can be confirmed that the desired capacity cannot be achieved in Experimental Example 1 as a result of excessively securing the pattern portion in order to control the volume expansion. That is, pure Si, which has better capacity characteristics than carbon-based active materials, was used to ensure capacity characteristics and rapid charging. However, it could be confirmed that when the pattern portion was formed excessively to ensure only the lifespan characteristics, the capacity characteristics rather deteriorated and the corresponding negative electrode could not be used as a negative electrode.

In conclusion, when the range of Formula 1 above is satisfied, the volume expansion can be controlled not only in stack-type pouch batteries but also in cylindrical and prismatic batteries wound into a roll shape, resulting in an advantageous effect on high energy density and high-capacity characteristics. In addition, it could be confirmed through the Experimental Examples that there is no difference in volume expansion even when the formation charging speed is increased compared to the existing condition, and not only expansions in the x and y directions but also thickness change in the z direction can be reduced.

## Claims

1. A negative electrode for a lithium secondary battery comprising:

   a negative electrode current collector layer; and
   a negative electrode active material layer formed on one surface or both surfaces of the negative electrode current collector layer,
   wherein the negative electrode active material layer comprises a pattern portion and satisfies Formula 1 below:

$$[Formula\ 1]$$

$$5 \leq [B/(A+B)] \times 100(\%) \leq 30$$

   in Formula 1 above,
   A refers to a volume of the negative electrode active material layer, and
   B refers to a volume of the pattern portion of the negative electrode active material layer.

2. The negative electrode for a lithium secondary battery of claim 1, wherein the negative electrode active material layer satisfies Formula 2 below:

$$[Formula\ 2]$$

$$[\{(x+x1)(y+y1)(z+z1)-xyz\} / xyz] \times 100(\%) < 50\%$$

in Formula 2 above,

x, y, and z are a total width, a total length, and a total thickness of the negative electrode active material layer comprising the pattern, respectively, after manufacturing the negative electrode for a lithium secondary battery, and

x1, y1, and z1 are changes in length in the x, y, and z directions, respectively, after manufacturing the negative electrode for a lithium secondary battery, and immediately after 1/3C CC-CV charge to 4.2V (0.05C cut-off) followed by 1/3C CC discharge to 2.5V.

3. The negative electrode for a lithium secondary battery of claim 1, wherein the negative electrode active material layer satisfies Formula 3 below:

[Formula 3]

$$[\{(x+x2)(y+y2)(z+z2)-xyz\} / xyz] \times 100(\%) < 100\%$$

in Formula 3 above,

x, y, and z are a total width, a total length, and a total thickness of the negative electrode active material layer comprising the pattern, respectively, after manufacturing the negative electrode for a lithium secondary battery, and

x2, y2, and z2 refer to changes in length in the x, y, and z directions, respectively, after manufacturing the negative electrode for a lithium secondary battery followed by 300 cycles of 1C CC-CV charge to 4.2V (0.05C cut-off) and 0.5C CC discharge to 3.0V.

4. The negative electrode for a lithium secondary battery of claim 1, wherein the negative electrode active material layer satisfies Formula 4 below:

[Formula 4]

$$5 \leq xyz - \{(xi \times n)yz + x(yj \times m)z - nmxiyj\} \leq 30$$

in Formula 4 above,

x, y, and z are a total width, a total length, and a total thickness of the negative electrode active material layer comprising the pattern, respectively, after manufacturing the negative electrode for a lithium secondary battery, and

n is the number of patterns in the x direction,
m is the number of patterns in the y direction,
xi refers to a width of the pattern,
yj refers to a length of the pattern,
i is an integer ranging from 1 to n, and
j is an integer ranging from 1 to m.

5. The negative electrode for a lithium secondary battery of claim 1, wherein the pattern portion comprises one or more selected from the group consisting of a 1D pattern, a 2D pattern, a V pattern, and a U pattern.

6. The negative electrode for a lithium secondary battery of claim 1, wherein the negative electrode active material layer comprises a negative electrode active material layer composition, and
wherein the negative electrode active material layer composition comprises a silicon-based active material, a negative electrode conductive material, and a negative electrode binder.

7. The negative electrode for a lithium secondary battery of claim 6, wherein the silicon-based active material comprises one or more selected from the group consisting of SiOx (x=0) and SiOx (0<x<2) and comprises 70 parts by weight or more of the SiOx (x=0) on the basis of 100 parts by weight of the silicon-based active material.

8. The negative electrode for a lithium secondary battery of claim 6, wherein the silicon-based active material is included in an amount of 60 parts by weight or more on the basis of 100 parts by weight of the negative electrode active material layer composition.

9. The negative electrode for a lithium secondary battery of claim 6, wherein the negative electrode conductive material comprises a planar conductive material and a linear conductive material, and
wherein the planar conductive material is included in an amount of 80 parts by weight or more and 99.9 parts by weight or less and the linear conductive material is included in an amount of 0.1 part by weight or more and 20 parts by weight or less on the basis of 100 parts by weight of the negative electrode conductive material.

10. The negative electrode for a lithium secondary battery of claim 6, wherein the negative electrode conductive material is included in an amount of 10 parts by weight or more and 40 parts by weight or less on the basis of 100 parts by weight of the negative electrode active material layer composition.

11. The negative electrode for a lithium secondary battery of claim 1, wherein a thickness of the negative electrode current collector layer is 1 $\mu$m or greater and 100 $\mu$m or less, and
wherein a thickness of the negative electrode active material layer is 20 $\mu$m or greater and 500 $\mu$m or less.

12. A lithium secondary battery comprising:

a positive electrode;
the negative electrode for a lithium secondary battery of any one of claims 1 to 11;
a separator provided between the positive electrode and the negative electrode; and
an electrolyte.

[Figure 1]

[Figure 2]

[Figure 3]

<div align="center">

**INTERNATIONAL SEARCH REPORT**

</div>

| International application No. |
| --- |
| **PCT/KR2023/020620** |

**A.    CLASSIFICATION OF SUBJECT MATTER**

**H01M 4/134**(2010.01)i; **H01M 4/38**(2006.01)i; **H01M 4/48**(2010.01)i; **H01M 4/62**(2006.01)i; **H01M 4/1395**(2010.01)i; **H01M 10/052**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/134(2010.01); H01M 10/04(2006.01); H01M 10/052(2010.01); H01M 10/0587(2010.01); H01M 2/10(2006.01); H01M 4/02(2006.01); H01M 4/04(2006.01); H01M 4/13(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 패턴 (pattern), 음극 (anode), 실리콘 (silicon), 팽창 (expansion), 부피 (volume), 배터리 스웰링 (cell swelling), 이차 전지 (secondary battery)

**C.    DOCUMENTS CONSIDERED TO BE RELEVANT**

| Category* | Citation of document, with indication, where appropriate, of the relevant passages | Relevant to claim No. |
| --- | --- | --- |
| X | KR 10-2014-0024207 A (DAINIPPON SCREEN MFG. CO., LTD.) 28 February 2014 (2014-02-28)<br>  See abstract; paragraphs [0009], [0011], [0021], [0023], [0027], [0039], [0050], [0055], [0072] and [0079]-[0080]; and figures 1b and 3a-3d. | 1-12 |
| X | KR 10-2018-0113404 A (LG CHEM, LTD.) 16 October 2018 (2018-10-16)<br>  See abstract; paragraphs [0035], [0054]-[0055], [0063]-[0066] and [0081]-[0083]; and figure 4a. | 1-12 |
| A | JP 2013-140781 A (SEMICONDUCTOR ENERGY LAB CO., LTD.) 18 July 2013 (2013-07-18)<br>  See entire document. | 1-12 |
| A | JP 2012-074203 A (DAINIPPON SCREEN MFG CO., LTD. et al.) 12 April 2012 (2012-04-12)<br>  See entire document. | 1-12 |
| A | JP 2012-018785 A (DAINIPPON SCREEN MFG CO., LTD.) 26 January 2012 (2012-01-26)<br>  See entire document. | 1-12 |

☐ Further documents are listed in the continuation of Box C.            ☑ See patent family annex.

| | |
| --- | --- |
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **27 March 2024** | **27 March 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/020620**

| Patent document cited in search report | | | Publication date (day/month/year) | Patent family member(s) | | | Publication date (day/month/year) |
|---|---|---|---|---|---|---|---|
| KR | 10-2014-0024207 | A | 28 February 2014 | CN | 103633296 | A | 12 March 2014 |
| | | | | JP | 2014-038794 | A | 27 February 2014 |
| | | | | JP | 2014-038795 | A | 27 February 2014 |
| | | | | KR | 10-1538842 | B1 | 22 July 2015 |
| | | | | US | 2014-0050977 | A1 | 20 February 2014 |
| KR | 10-2018-0113404 | A | 16 October 2018 | KR | 10-2209675 | B1 | 28 January 2021 |
| JP | 2013-140781 | A | 18 July 2013 | CN | 103151553 | A | 12 June 2013 |
| | | | | CN | 103151553 | B | 17 August 2016 |
| | | | | CN | 106099170 | A | 09 November 2016 |
| | | | | CN | 106099170 | B | 20 August 2019 |
| | | | | JP | 6095961 | B2 | 15 March 2017 |
| | | | | KR | 10-2013-0063467 | A | 14 June 2013 |
| | | | | KR | 10-2019-0110505 | A | 30 September 2019 |
| | | | | KR | 10-2241235 | B1 | 15 April 2021 |
| | | | | US | 2013-0143090 | A1 | 06 June 2013 |
| | | | | US | 2015-0111078 | A1 | 23 April 2015 |
| | | | | US | 2016-0156061 | A1 | 02 June 2016 |
| | | | | US | 8927127 | B2 | 06 January 2015 |
| | | | | US | 9281543 | B2 | 08 March 2016 |
| | | | | US | 9595732 | B2 | 14 March 2017 |
| JP | 2012-074203 | A | 12 April 2012 | CN | 102420338 | A | 18 April 2012 |
| | | | | JP | 5462758 | B2 | 02 April 2014 |
| | | | | KR | 10-1320737 | B1 | 21 October 2013 |
| | | | | KR | 10-2012-0032396 | A | 05 April 2012 |
| | | | | TW | 201214850 | A | 01 April 2012 |
| | | | | TW | I443898 | B | 01 July 2014 |
| | | | | US | 2012-0077093 | A1 | 29 March 2012 |
| | | | | US | 8999587 | B2 | 07 April 2015 |
| JP | 2012-018785 | A | 26 January 2012 | JP | 5492686 | B2 | 14 May 2014 |

Form PCT/ISA/210 (patent family annex) (July 2022)

**EP 4 539 143 A1**

## REFERENCES CITED IN THE DESCRIPTION

**Patent documents cited in the description**

- KR 1020220175723

- JP 2009080971 A